# EUROPEAN PATENT APPLICATION

(11) **EP 3 382 381 A1**
(43) Date of publication of application: **03.10.2018**
(21) Application number: 16868534.5
(22) Date of filing: 22.11.2016
(51) Int. Cl.: G01N 27/22

(54) **PARTICULATE MATTER MEASURING DEVICE COMPONENT AND MANUFACTURING METHOD THEREFOR**

(30) Priority: 26.11.2015 JP 2015230699; 25.12.2015 JP 2015254149; 28.01.2016 JP 2016014742; 08.07.2016 JP 2016136161; 13.09.2016 JP 2016178578
(71) Applicant: Kyocera Corporation, Kyoto-shi, Kyoto 612-8501 (JP)
(72) Inventor: MURAMATSU, Hiroki, Kyoto-shi Kyoto 612-8501 (JP); MURAMOTO, Yasuhito, Kyoto-shi Kyoto 612-8501 (JP); INOUE, Shogo, Kyoto-shi Kyoto 612-8501 (JP)
(74) Representative: Viering, Jentschura & Partner mbB Patent- und Rechtsanwälte
(86) International application number: PCT/JP2016/084551
(87) International publication number: WO 2017/090587

(57) **Abstract**

A particulate matter measuring device component includes: a base portion formed of ceramics, the base portion being internally provided with a flow channel through which gas flows; a filter portion formed of porous ceramics, the filter portion being disposed within the flow channel so as to divide the flow channel into a plurality of portions; and a pair of electrodes for formation of electrostatic capacitance, disposed in the base portion so that the filter portion is sandwiched between the pair of electrodes, a wall surface of the flow channel of the base portion being denser than a surface of the filter portion.

## Description

### Technical Field

The present invention relates to a particulate matter measuring device component, and a manufacturing method therefor.

### Background Art

There is a heretofore known particulate matter measuring device component for use in measurement of the amount of particulate matter contained in exhaust gas from a diesel engine as described in Japanese Unexamined Patent Publication JP-A 2014-159783 (hereafter referred to as Patent Literature 1), for example. The particulate matter measuring device component described in Patent Literature 1 comprises a filter which is divided by porous partition walls into a plurality of cells, and a pair of electrodes disposed so that, given that at least one of the cells serves as a cell for measurement, this measurement cell is sandwiched between the pair of electrodes. In the particulate matter measuring device component described in Patent Literature 1, the amount of accumulation of particulate matter in exhaust gas caught by the filter is determined by calculation on the basis of electrostatic capacitance between the pair of electrodes.

However, when the amount of accumulation of particulate matter is measured using the particulate matter measuring device component described in Patent Literature 1, improvement in linearity between an actual amount of accumulation and a measurement value is difficult. As a cause of the difficulties in improvement of linearity, for example, between a case where particulate matter is accumulated on a surface of the cell partition wall which surface is perpendicular to the direction of arrangement of the pair of electrodes and a case where particulate matter is accumulated on a surface of the cell partition wall which surface is parallel to the same direction, there is a difference in variation of electrostatic capacitance between the electrodes even if the amount of particulate matter is the same.

### Summary of Invention

A particulate matter measuring device component comprises: a base portion formed of ceramics, the base portion being internally provided with a flow channel through which gas flows; a filter portion formed of porous ceramics, the filter portion being disposed within the flow channel so as to divide the flow channel into a plurality of portions; and a pair of electrodes for formation of electrostatic capacitance, disposed in the base portion so that the filter portion is sandwiched between the pair of electrodes, and a wall surface of the flow channel of the base portion is denser than a surface of the filter portion.

### Brief Description of Drawings

FIG. 1 is a perspective view of a particulate matter measuring device component;
FIG. 2 is a sectional view showing a vertical section of the particulate matter measuring device component shown in FIG. 1;
FIG. 3 is a sectional view showing a transverse section of the particulate matter measuring device component shown in FIG. 1;
FIG. 4 is a schematic view showing a wiring pattern of an electrode of the particulate matter measuring device component shown in FIG. 1;
FIG. 5 is a schematic view showing a wiring pattern of an electrode of a modified example of the particulate matter measuring device component;
FIG. 6 is a sectional view showing a vertical section of a modified example of the particulate matter measuring device component;
FIG. 7 is a sectional view showing a transverse section of a modified example of the particulate matter measuring device component;
FIG. 8 is a sectional view showing a vertical section of a modified example of the particulate matter measuring device component;
FIG. 9 is a sectional view showing a vertical section of a modified example of the particulate matter measuring device component;
FIG. 10 is a sectional view showing a vertical section of a modified example of the particulate matter measuring device component;
FIG. 11 is a schematic diagram showing a wiring pattern of an electrode of a modified example of the particulate matter measuring device component;
FIG. 12 is a schematic diagram showing a wiring pattern of an electrode of a modified example of the particulate matter measuring device component;
FIG. 13 is a schematic diagram showing a method for manufacturing a particulate matter measuring device component;
FIG. 14 is a sectional view showing a vertical section of a modified example of the particulate matter measuring device component;
FIG. 15 is a sectional view showing a vertical section of a modified example of the particulate matter measuring device component;
FIG. 16 is a sectional view showing a vertical section of a modified example of the particulate matter measuring device component;
FIG. 17 is a sectional view showing a vertical section of a modified example of the particulate matter measuring device component;
FIG. 18 is a sectional view showing a vertical section of a modified example of the particulate matter measuring device component;
FIG. 19 is a sectional view showing a vertical section of a modified example of the particulate matter measuring device component;
FIG. 20 is a sectional view showing a vertical section of a modified example of the particulate matter measuring device component;
FIG. 21 is a sectional view showing a vertical section of a modified example of the particulate matter measuring device component;
FIG. 22 is a sectional view showing a vertical section of a modified example of the particulate matter measuring device component;
FIG. 23 is a sectional view showing a vertical section of a modified example of the particulate matter measuring device component;
FIG. 24 is a sectional view showing a vertical section of a modified example of the particulate matter measuring device component;
FIG. 25(a) is a perspective view of a modified example of the particulate matter measuring device component, FIG. 25(b) is a sectional view showing a cross section taken along the line C-C (vertical section) of the construction shown in FIG. 25(a), and FIG. 25(c) is a sectional view showing a cross section taken along the line D-D (vertical section) of the construction shown in FIG. 25(a);
FIG. 26 is a sectional view showing a vertical section of a modified example of the particulate matter measuring device component;
FIG. 27 is a sectional view showing a vertical section of a modified example of the particulate matter measuring device component;
FIG. 28 is a sectional view showing a vertical section of a modified example of the particulate matter measuring device component;
FIG. 29 is a sectional view showing a vertical section of a modified example of the particulate matter measuring device component; and
FIG. 30 is a sectional view showing a transverse section of a modified example of the particulate matter measuring device component.

### Description of Embodiments

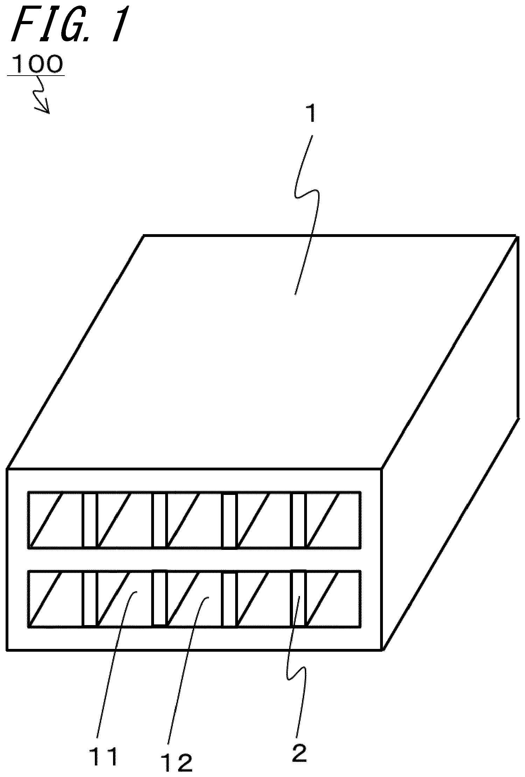

FIG. 1 is a perspective view showing the configuration of a particulate matter measuring device component 100. As shown in FIG. 1, the particulate matter measuring device component 100 comprises a base portion 1 internally provided with a flow channel 11, and a filter portion 2 disposed within the flow channel 11. The particulate matter measuring device component 100 further comprises a pair of electrodes 3 for formation of electrostatic capacitance disposed in the base portion. For example, the particulate matter measuring device component 100 is used for the measurement of the amount of particulate matter contained in exhaust gas from a diesel engine.

The base portion 1 is a member for forming the flow channel 11 for gas flow. For example, the base portion 1 is made of insulating ceramics such as alumina. For example, the base portion 1 has one or a plurality of flow channels 11 internally. In the particulate matter measuring device component 100 as shown in FIG. 1, the base portion 1 has an outside shape of a rectangular parallelepiped, and has two flow channels 11 internally. The flow channels 11 each extend in a longitudinal direction of a principal surface of the base portion 1. The flow channels 11 are each divided by the filter portion 2 into a plurality of separate spaces, each of which will be defined as a split channel 12. The flow channel 11 opens to one side surface of the base portion 1 and the other side surface located opposite thereto. The two flow channels 11 are disposed in a thickness direction of the base portion 1. For example, the base portion 1 can be set at 40 mm in length in a longitudinal direction of the principal surface, 10 mm in length in a transverse direction thereof (width), and 5 mm in thickness. Moreover, each of the split channels 12 obtained by dividing the flow channel by the filter portion 2 (split channel 12 lying between the filter portions 2) can be set at 1.2 mm in width and 1.2 mm in distance between a bottom surface and a ceiling surface thereof. The length of the flow channel 11 can be set at 40 mm which is equal to the length of the base portion 1.

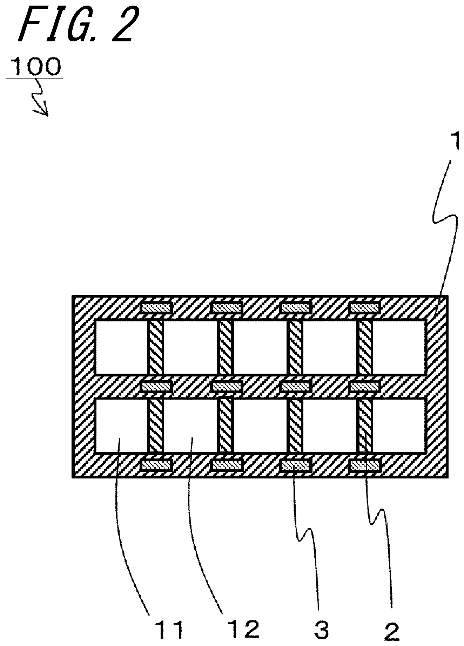

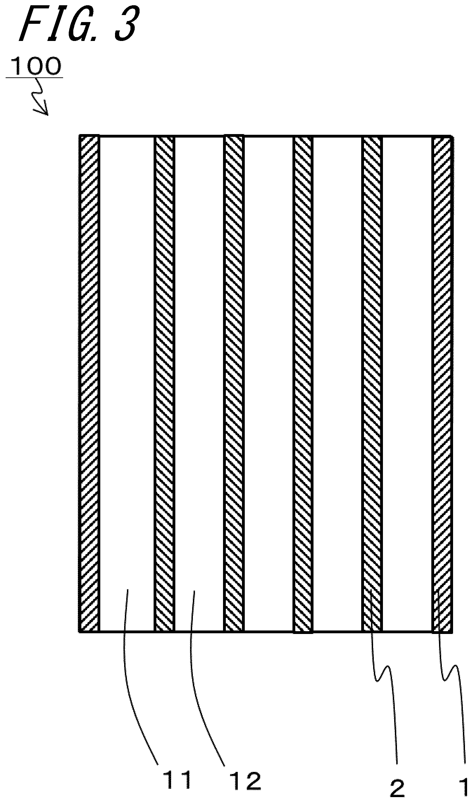

The filter portion 2 is a member for collecting particulate matter contained in gas. As shown in FIG. 2, the filter portion 2 is disposed within the flow channel 11. As shown in FIG. 3, in the particulate matter measuring device component 100, the filter portion 2 has the form of a plate and extends along the longitudinal direction of the base portion 1 (along a lengthwise direction of the flow channel 11). A plurality of filter portions 2 are provided so as to divide the flow channel 11 of the base portion 1 into a plurality of regions (split channels 12). In the particulate matter measuring device component 100, four filter portions 2 are provided per flow channel 11. The four filter portions 2 are disposed in parallel with one another. The filter portion 2 is formed of porous ceramics. As the porous ceramics, for example, porous alumina may be used. When formed of porous alumina, the filter portion 2 allows the gas flowing through the flow channel 11 to pass therethrough. At this time, part of the particulate matter contained in the gas is collected (accumulated) on the filter portion 2.

In the particulate matter measuring device component 100, the wall surface of the flow channel 11 of the base portion 1 is denser than the surface of the filter portion 2. In this case, the wall surface of the flow channel 11 of the base portion 1 can be less prone to accumulation of particulate matter, whereas the surface of the filter portion 2 can be apt to have accumulation of particulate matter. As a result, it is possible to localize accumulation of particulate matter to the filter portion 2, and therefore to improve linearity between the amount of accumulation of particulate matter and a measurement value. Consequently, it is possible to improve a measurement accuracy of the particulate matter measuring device component 100.

For example, whether the wall surface of the flow channel 11 of the base portion 1 is denser than the surface of the filter portion 2 can be ascertained in the following process. That is, the wall surface of the flow channel 11 of the base portion 1 and the surface of the filter portion 2 are observed using a scanning electron microscope (SEM). The SEM image obtained is subjected to image processing for determination of surface porosity. That one of the observation targets which has a smaller porosity is judged as being denser. For example, the porosity of the wall surface of the flow channel 11 of the base portion 1 can be set to be lower than or equal to 3%. For example, the porosity of the surface of the filter portion 2 can be set to fall in the range of 40% to 70%. The wall surface of the flow channel 11 as employed herein refers to part of the flow channel 11 corresponding to the entire area of the inner surface of the base portion 1 which faces gas. That is, the wall surface of the flow channel 11 includes not only the inner side surface of the flow channel 11 but also the ceiling surface and the bottom surface of the flow channel 11.

Moreover, as employed herein the condition where the wall surface of the flow channel 11 of the base portion 1 is denser than the surface of the filter portion 2 includes a case where only the ceiling surface and the bottom surface of the flow channel 11 are denser than the surface of the filter portion 2. Also in this case, the ceiling surface and the bottom surface of the flow channel 11 of the base portion 1 can be less prone to accumulation of particulate matter, whereas the surface of the filter portion 2 can be apt to have accumulation of particulate matter. As a result, accumulation of particulate matter can be localized to the filter portion 2, and therefore it is possible to achieve improvement in linearity between the amount of accumulation of particulate matter and a measurement value.

By setting the porosity of the wall surface of the flow channel 11 of the base portion 1 to be lower than or equal to 3%, it is possible to make it difficult for particulate matter to enter inside the base portion 1. As a result, it is possible to reduce the likelihood of adhesion of particulate matter to the electrode 3, and therefore it is possible to reduce the likelihood of improper measurement of electrostatic capacitance between the electrodes 3 due to the adhesion of particulate matter to the electrode 3. Consequently, it is possible to improve measurement accuracy of the particulate matter measuring device component 100.

The base portion 1 and the filter portion 2 are formed integrally with each other. By forming the base portion 1 and the filter portion 2 integrally with each other, it is possible to improve the long-term reliability of the particulate matter measuring device component 100. More specifically, in a case where the base portion 1 and the filter portion 2 are separately formed and thereafter are joined together, for example, separation may occur at the interface between the base portion 1 and the filter portion 2. Especially when joining these portions together with use of a bonding material, etc., the possibility arises that due to quality degradation of the bonding material the filter portion 2 cannot be kept secured to the base portion 1 properly. In this regard, by forming (firing) the base portion 1 and the filter portion 2 integrally with each other, it is possible to reduce the likelihood of occurrence of deterioration damage at the interface between the base portion 1 and the filter portion 2.

In particular, where the base portion 1 and the filter portion 2 are formed of the same ceramic material, the thermal expansion coefficient of the base portion 1 and the thermal expansion coefficient of the filter portion 2 become analogous to each other. This makes it possible to improve the long-term reliability of the particulate matter measuring device component 100 under heat cycle. As employed herein the condition where the base portion 1 and the filter portion 2 are formed of the same ceramic material means that ceramics constituting the base portion 1 and ceramics constituting the filter portion 2 are equal in major component (component occupying 80% by mass or more).

In the particulate matter measuring device component 100, the base portion 1 and the filter portion 2 are formed of alumina. Alumina is inexpensive to manufacture, and, another advantage resides in easiness in surface porosity adjustment as will hereafter be described.

For example, the base portion 1 having a surface porosity of 3% or less and the filter portion 2 having a surface porosity of about 40 to 70% can be formed integrally with each other by the following process. That is, a ceramic paste having an alumina powder content of 93% by mass and a resin binder content of 7% by mass is used for a part forming a base portion 1. Moreover, a ceramic paste having an alumina powder content of 55% by mass, a pore-forming material content of 38% by mass, and a resin binder content of 7% by mass is used for a part forming a filter portion 2. These ceramic pastes are made into green sheets of predetermined shapes by the doctor blade method. At this time, by printing an electrically conductive paste onto the green sheet, the capacitance-forming electrode 3 can be obtained. The green sheets are stacked under pressure by a uniaxial press. After being subjected to surface treatment on an as needed basis, the sheet stack is fired at 1500°C, whereupon the filter portion 2 and the base portion 1 each having the described porosity can be formed.

For example, dimensions of the filter portion 2 can be set to 0.3 mm in length in the width direction of the base portion 1, 1.2 mm in length in the thickness direction of the base portion 1, which is equal to the distance between the bottom surface and the ceiling surface of the flow channel 11, and 40 mm in length in the lengthwise direction of the base portion 1.

The electrode 3 is a member for forming electrostatic capacitance. As shown in FIG. 2, in the base portion 1, the pair of electrodes 3 are disposed so that the filter portion 2 is sandwiched between the pair of electrodes 3. More specifically, as practiced in the particulate matter measuring device component 100, when providing a plurality of flow channels 11, the electrodes 3 are disposed so that the filter portion 2 located in each flow channel 11 is sandwiched between the corresponding pair of electrodes 3. For example, the electrode 3 may be either provided so as to straddle the plurality of filter portions 2 or provided for each filter portion 2 on an individual basis. As practiced in the particulate matter measuring device component 100 shown in FIG. 2, when providing two flow channels 11 disposed in a vertical direction, the electrode 3 may be disposed at each of a location above the upper flow channel 11, a location between the upper flow channel 11 and the lower flow channel 11, and a location below the lower flow channel 11. The electrode 3 disposed at the location between the upper flow channel 11 and the lower flow channel 11 can form electrostatic capacitance in a region between itself and the electrode 3 disposed at the location above the upper flow channel 11, as well as in a region between itself and the electrode 3 disposed at the location below the lower flow channel 11.

Electrostatic capacitance is formed between the pair of electrodes 3 disposed so that the filter portion 2 is sandwiched between the pair of electrodes 3. As particulate matter is collected on the filter portion 2, the electrostatic capacitance between the pair of electrodes 3 varies. The amount of accumulation of the particulate matter caught by the filter portion 2 can be measured on the basis of the result of detection of the variation of the electrostatic capacitance using an external detector.

In the particulate matter measuring device component 100, the electrode 3 is embedded in the base portion 1. This makes it possible to reduce the likelihood that the electrode 3 will be affected by gas-caused corrosion, etc. It is also possible to reduce the likelihood of adhesion of particulate matter, etc. to the surface of the electrode 3, and therefore to improve measurement accuracy of the particulate matter measuring device component 100. Although the electrode 3 is disposed within (embedded in) the base portion 1 in the particulate matter measuring device component 100, the arrangement of the electrode 3 is not limited to this. More specifically, for example, the electrode 3 may be positioned on the outer surface of the base portion 1 (other surface than the wall surface of the flow channel 11) .

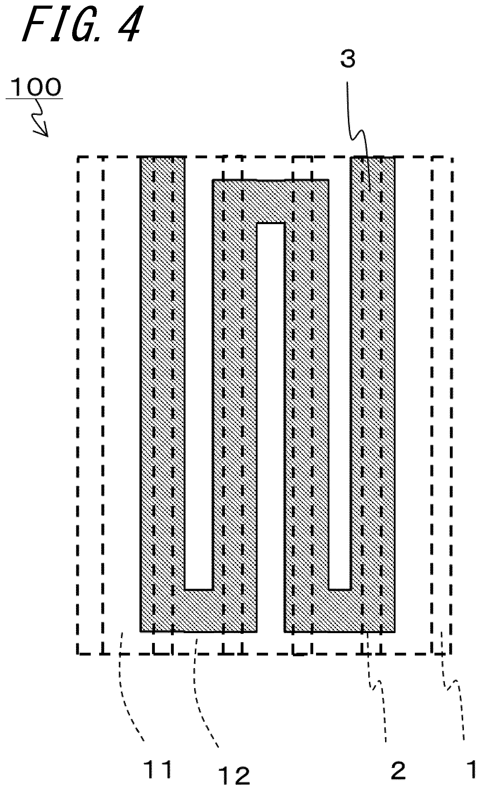

As shown in FIG. 4, in the particulate matter measuring device component 100, for example, the electrode 3 is designed in a linear wiring pattern so as to extend along the filter portion 2. Thus, by arranging the electrode 3 along the filter portion 2, it is possible to improve linearity between the amount of particulate matter caught by the filter portion 2 and variation in the electrostatic capacitance between the electrodes 3. This is because it is possible to reduce capacitance variation caused by particulate matter which adhered to other area than the filter portion 2 (for example, the wall surface of the flow channel 11) by arranging the electrode 3 along the filter portion 2. Note that the electrode 3 is not limited in plan configuration to the linear form, but may be circular or rectangular in plan configuration.

Moreover, in the case of designing the electrode 3 in linear wiring pattern, as compared to the case of providing a circular or rectangular electrode 3, a greater resistance value can be obtained. This allows the electrode 3 to serve also as a heater under application of high voltage. In this case, particulate matter caught by the filter portion 2 can be removed by heating operation.

Moreover, either one of direct current and alternating current may be passed through the electrode 3 to cause it to generate heat. By passing alternating current in particular, it is possible to reduce migration which occurs in the electrode 3, and thereby improve the long-term reliability of the particulate matter measuring device component 100.

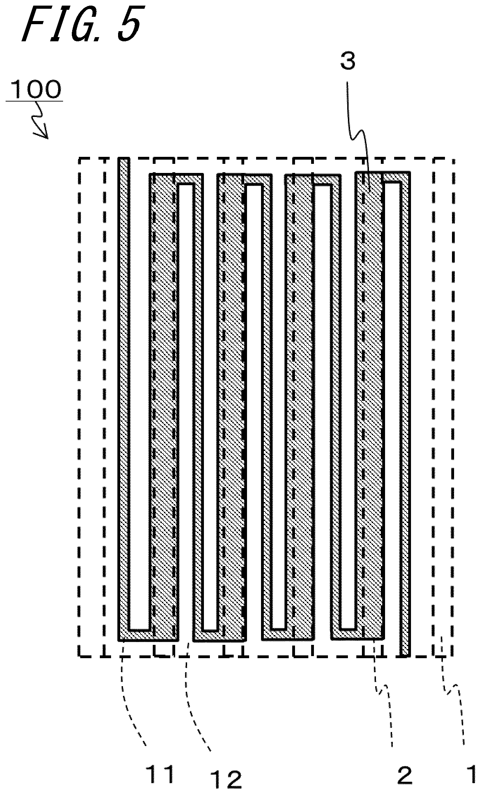

Particularly, as in an example shown in FIG. 5, the electrode 3 may be designed in a linear wiring pattern, and may comprise a portion lying in a region of the base portion 1 in which the filter portion 2 is interposed and a portion lying in a region of the base portion 1 in which the filter portion 2 is not interposed, and the portion of the electrode 3 lying in the region in which the filter portion 2 is not interposed may be narrower in width than the portion of the electrode 3 lying in the region in which the filter portion 2 is interposed, as seen in plan view. Thus, the portion of the electrode 3 lying in the region in which the filter portion 2 is interposed is given an adequate width for successful formation of electrostatic capacitance between the electrodes 3, whereas the portion of the electrode 3 lying in the region in which the filter portion 2 is not interposed is given a narrower width, whereby a greater resistance value can be attained. This allows the electrode 3 to function as a capacitance-forming electrode effectively, as well as to function as a heater effectively.

In the examples shown in FIGS. 4 and 5, the pair of electrodes 3 disposed so that the filter portion 2 is sandwiched between the pair of electrodes 3 are each designed in a single meandering linear wiring pattern composed of a plurality of portions, each extending along corresponding one of the plurality of filter portions 2, connected to one another at their ends. Each end of the single electrode is drawn out on the outer surface of the base portion 1, and, each of the pair of electrodes 3 defines wiring of single system.

For example, a metal material such as platinum or tungsten may be used for the electrode 3. Moreover, where the electrode 3 is designed in a linear wiring pattern, for example, the width, the length, and the thickness of the electrode 3 are set at 2 mm, 38 mm, and 30 µm, respectively.

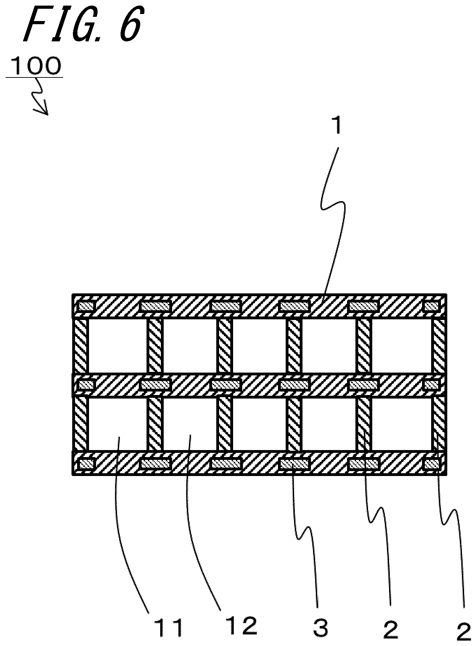

Although the above-described particulate matter measuring device component 100 is designed so that the base portion 1 is internally provided with the flow channel 11, the component design is not limited to this. More specifically, for example, as shown in FIG. 6, the particulate matter measuring device component may comprise: a pair of base portions 1, each comprising a plate-like member formed of ceramics, the pair of base portions 1 being disposed in juxtaposition so that principal surfaces of the pair of base portions 1 are opposed to each other; a filter portion 2 which is formed of porous ceramics and is disposed so as to divide a space between the pair of base portions 1 to form flow channels; and a pair of electrodes for formation of electrostatic capacitance, each provided in corresponding one of the pair of base portions 1, the pair of electrodes being disposed so that the filter portion 2 is sandwiched between the pair of electrodes, and, the opposed principal surfaces of the pair of base portions 1 may be denser than a surface of the filter portion 2. Thus, in the particulate matter measuring device component 100 of another design, the flow channel 11 is formed by partitioning the space between the base portions 1 with the filter portion 2. While gas is passed through the flow channel 11, particulate matter is collected on the filter portion 2, and, the amount of the particulate matter can be measured by detecting variation in electrostatic capacitance between the electrodes 3. Like the earlier described particulate matter measuring device component 100, even in such a particulate matter measuring device component 100, measurement accuracy can be improved.

More specifically, in the particulate matter measuring device component 100 shown in FIG. 6, three base portions 1 are disposed in juxtaposition apart from each other so as to define two spaces, in each of which six filter portions 2 are disposed. The number of the base portions 1 may be two or more than three instead, and also the number of the filter portions 2 may be suitably changed.

In the particulate matter measuring device component 100 shown in FIG. 6, the filter portion 2 serves also as a side wall. As an alternative, a base portion 1 serving as a side wall may be disposed outside the outer filter portion 2 so as to be in contact therewith. This arrangement is similar to that adopted in the particulate matter measuring device component 100 shown in FIG. 2 in which the outer filter portion 2 is disposed so as to be in contact with the side wall of the base portion 1. By adopting such constitution, the rigidity of the particulate matter measuring device component 100 can be improved, and, the exposed area of the filter portion 2 having a relatively low strength can be reduced, and therefore deformation caused by thermal stress or damage caused by external force can be suppressed, with the consequent attainment of higher reliability. Moreover, owing to each and every wall facing the flow channel 11 being defined by the filter portion 2, both the particulate collection efficiency and sensitivity can be increased.

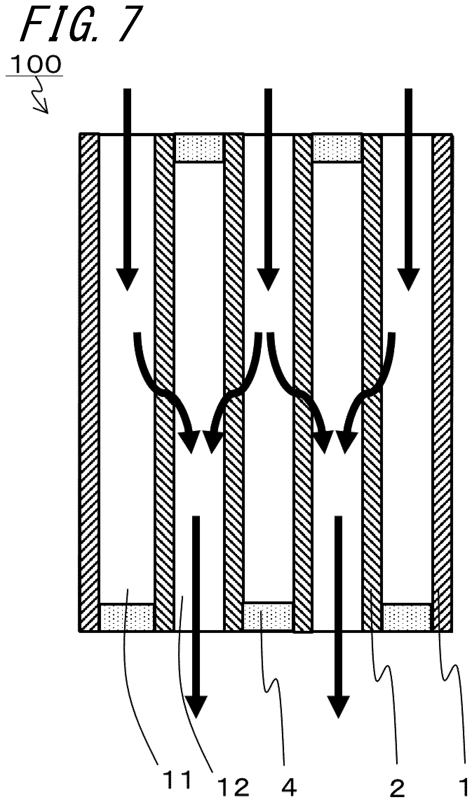

Moreover, although the particulate matter measuring device component 100 shown in FIG. 1 is designed so that the flow channel 11 has the form of an open-ended channel, the component design is not limited to this. For example, as shown in FIG. 7, ends of the flow channels 11 may be partly sealed by sealing portions 4. Particularly, it is advisable that one end of the flow channel 11 is partly opened, and part of the other end opposed to the opened part of the one end is closed, and one end of the flow channel 11 is partly closed, and part of the other end opposed to the closed part of the one end is opened.

This arrangement facilitates the passage of the gas flowing within the flow channel 1 through the filter portion 2, and therefore facilitates collection of particulate matter on the filter portion 2. Consequently, measurement accuracy of the particulate matter measuring device component 100 can be improved. Note that, in FIG. 7, the flow of the gas is indicated by arrows.

Moreover, for example, a resin material such as fluorine resin may be used for the sealing portion 4. As an alternative, the sealing portion 4 may be formed of the same ceramics as that used for the filter portion 2 or the base portion 1. In this case, since the difference in thermal expansion between the sealing portion 4 and the filter portion 2 or the base portion 1 can be reduced, it is possible to improve the long-term reliability of the construction under heat cycle.

Moreover, the filter portion 2 may be formed of ceramics, and also, the filter portion 2, the base portion 1, and the sealing portion 4 may be formed (fired) integrally with one another. This makes it possible to reduce the likelihood of occurrence of deterioration damage at the interface between the sealing portion 4 and the base portion 1, or between the sealing portion 4 and the filter portion 2.

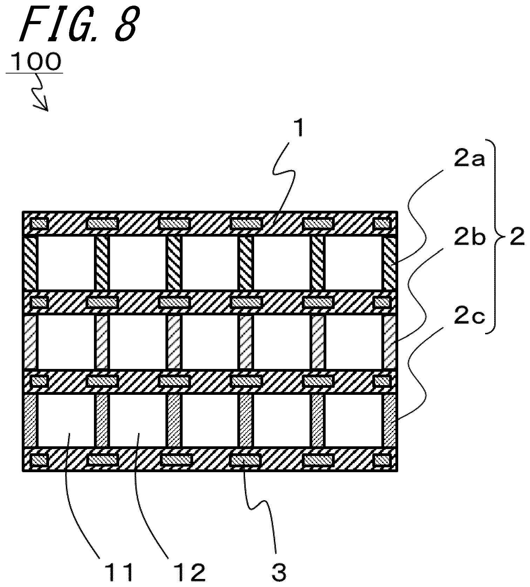

In the particulate matter measuring device component 100 shown in each of FIGS. 8 to 10, a plurality of filters 2 having different porous degrees from each other are provided. This allows the particulate matter measuring device component 100 to have higher added value, and more specifically it can be built as a particulate matter measuring device component 100 capable of knowing the particle size distribution of particulate matter, or a long-life particulate matter measuring device component 100 capable of long hours of continuous particulate collecting operation.

More specifically, in an example shown in FIG. 8, the filter portion 2 formed of porous ceramics comprises three filter portions 2a, 2b, and 2c which differ from one another in pore size and pore diameter. In the example shown in FIG. 8, there are provided the first filter portion 2a having a relatively large pore diameter, the third filter portion 2c having a relatively small pore diameter, and the second filter portion 2b having a pore diameter of between the pore diameter of the first filter portion 2a and the pore diameter of the third filter portion 2c.

There are provided the plurality of filter portions 2a, 2b, and 2c having different pore diameters, from which it follows that particulate matter caught by the filter portion 2a, particulate matter caught by the filter portion 2b, and particulate matter caught by the filter portion 2c differ from one another in average particle size. This makes it possible to find the particle size distribution of collecting particulate matter on the basis of electrostatic capacitance detected by the electrodes 3 disposed so that each of the plurality of filter portions 2a, 2b, and 2c having different pore diameters is sandwiched between the electrodes 3, and thereby estimate, for example, the condition of combustion in an engine which emits particulate-laden exhaust gas, and the condition of a PM filter located upstream of the particulate matter measuring device component 100.

Moreover, in the example shown in FIG. 8, the plurality of filter portions 2a, 2b, and 2c having different pore diameters are disposed in order of particle diameter. More specifically, in the example shown in FIG. 8, there are provided three vertically aligned spaces (flow channels 11) as seen in the drawing, the upper one of which receives the first filter portions 2a, the intermediate one of which receives the second filter portions 2b, and the lower one of which receives the third filter portions 2c. That is, the filter portions having the same pore diameter are disposed in a row in each of the spaces. In this case, pairs of the electrodes 3 disposed so that the filter portions having the same pore diameter are sandwiched between the pair of electrodes 3 can be placed side by side, and the pairs of electrodes can be merged into a single, combined electrode.

The filter portions 2 may be classified according to pore diameter not only under three groups but also under two or four or more groups. Although the filter portions 2 having the same pore diameter are disposed in a row in the horizontal direction in the example shown in FIG. 8, they may be disposed in a row in the vertical direction. Moreover, the filter portions 2 may be aligned either in a random fashion or in a row as mentioned above.

As employed herein the pore diameter refers to average pore diameter. The pore diameter is determined on the basis of the result of calculation of the average pore diameter of pores as observed within the range of a SEM image of the surface or section of the filter portion 2 through image analysis. The pore diameter measurement may be conducted with use of an image taken under the SEM at a 100-fold magnification with a field of view of 1.0 mm × 1.3 mm.

For example, the filter portions 2 have pore diameters of 1 µm to 60 µm. As in the above-described case where the filter portion 2 comprises the three filter portions 2a, 2b, and 2c having different pore diameters, for example, the first filter portions 2a have pore diameters of 10 µm to 60 µm, the second filter portions 2b have pore diameters of 5 µm to 30 µm, and the third filter portions 2c have pore diameters of 1 µm to 15 µm.

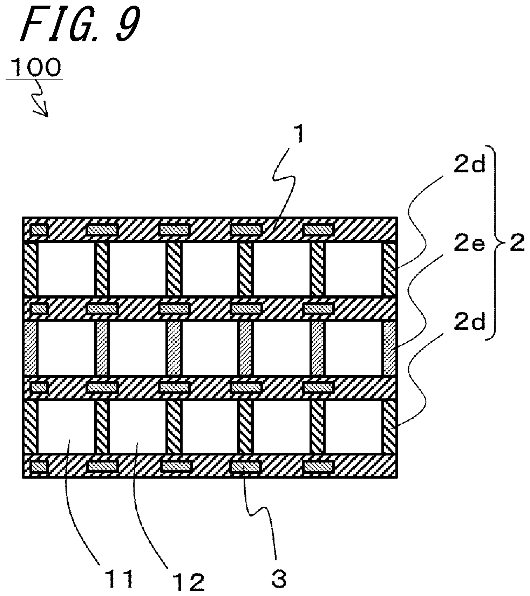

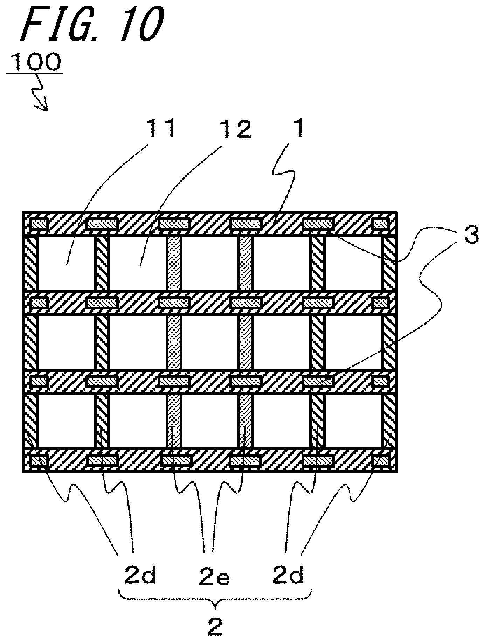

Moreover, in the examples shown in FIGS. 9 and 10, the filter portion 2 formed of porous ceramics comprises two filter portions 2d and 2e which differ from each other in porosity. In the examples shown in FIGS. 9 and 10, there are provided the fourth filter portion 2d having a relatively large porosity, and the fifth filter portion 2e having a relatively small porosity. In the flow channel 11 as seen in section perpendicular to the lengthwise direction, the outer filter portion 2 is greater in porosity than the inner filter portion 2. Thus, in the flow channel 11 as seen in section perpendicular to the lengthwise direction, the fourth filter portion 2d is provided as the outer filter portion 2, and the fifth filter portion 2e is provided as the inner filter portion 2. In an example shown in FIG. 9, the fourth filter portion 2d is located outward in the vertical direction, and the fifth filter portion 2e is located inward in the same direction. In this construction, there are provided three vertically aligned spaces (flow channels 11) as seen in the drawing, the upper one and the lower one of which (flow channels 11) respectively receive the fourth filter portions 2d, and the intermediate one of which (flow channel 11) receives the fifth filter portions 2e. In an example shown in FIG. 10, the fourth filter portion 2d is located outward in the horizontal direction, and the fifth filter portion 2e is located inward in the same direction, as seen in the drawing. In this construction, there are provided three vertically aligned spaces (flow channels 11), in each of which six filter portions 2 are disposed in the horizontal direction. Of the six filter portions 2, the two located to the right, as well as the two located to the left, are each the fourth filter portion 2d, and the two located between the right-hand filter portion pair and the left-hand filter portion pair are each the fifth filter portion 2e.

When gas containing particulate matter flows through the internal space (flow channel 11) of the particulate matter measuring device component 100, the flow rate of the gas flowing through the central region of the space (the inner peripheral region of the flow channel 11 as seen in section perpendicular to the lengthwise direction) tends to be greater than the flow rate of the gas flowing through the outer region of the space (the outer peripheral region of the flow channel 11 as seen in section perpendicular to the lengthwise direction). Consequently, the inner filter portion 2 catches a larger amount of particulate matter than an amount of particulate matter which would be caught by the outer filter portion 2, and thus becomes clogged by particulate matter more quickly. When particulate clogging occurs at a fast pace, the frequency of filter reconditioning operation effected by removal of particulate matter under heat applied by a heater is increased, and therefore the deterioration of the particulate matter measuring device component 100 is accelerated.

In this regard, as described above, when the porosity of the outer filter portion 2 (the fourth filter portion 2d) is greater than the porosity of the inner filter portion 2 (the fifth filter portion 2e) in the flow channel as seen in section perpendicular to the lengthwise direction, gas is easy to flow toward the filter portion 2 having a larger porosity (the fourth filter portion 2d), and thereby the gas flow rate difference depending on the position becomes small in section perpendicular to the lengthwise direction of the flow channel are reduced. Consequently, it never occurs that the inner filter portion 2 becomes clogged by particulate matter more quickly than others, and thus there is obtained the long-life particulate matter measuring device component 100 capable of long hours of continuous particulate collecting operation.

In FIGS. 9 and 10, there are shown the construction in which the vertically outwardly located filter portion 2 (the fourth filter portion 2d) is greater in porosity than the vertically inwardly located filter portion 2 (the fifth filter portion 2e) and the construction in which the horizontally outwardly located filter portion 2 (the fourth filter portion 2d) is greater in porosity than the horizontally inwardly located filter portion 2 (the fifth filter portion 2e), respectively. Alternatively, as a combination of these constructions, the filter portions 2 located outward in both vertical and horizontal directions, viz., located toward the periphery of the construction as seen in section, may be made greater in porosity than those located inward in both vertical and horizontal directions, viz., located centrally of the construction as seen in section. It is advisable to dispose the base portions 1 and the filter portions 2 alternately in the vertical direction in that the construction as in the example shown in FIG. 9 comprising the vertically outwardly located fourth filter portions 2d and the vertically inwardly located fifth filter portions 2e can be easily manufactured by a manufacturing method as will hereafter be described.

Examples of a porosity measurement method required for porosity comparisons of the filter portions 2 include mercury intrusion porosimetry (JIS R1655: 2003) and SEM image analysis. When adopting the SEM image analysis, the porosity of the filter portion 2 can be determined by taking a SEM image of the section of the filter portion 2 and calculating a pore area ratio within the range of this SEM image through image analysis. For example, the porosity measurement may be conducted with use of an image taken under the SEM at 100-fold magnification with a field of view of 1.0 mm × 1.3 mm.

In the case where the porosity of the filter portion 2 falls in the range of 40% to 70%, the filter portion 2d having a relatively large porosity is set for a porosity of 50 to 70%, and the filter portion 2e having a relatively small porosity is set for a porosity of 40 to 60%.

A method for manufacturing the particulate matter measuring device component comprises: a step of preparing a plurality of first ceramic green sheets 12; a step of preparing a plurality of second ceramic green sheets 22; a step of forming an electrode layer 32 on each of the plurality of first ceramic green sheets 12; a step of providing a through hole 112 in each of the plurality of second ceramic green sheets 22; a step of forming a stacked body 102 by stacking together the first ceramic green sheets 12 provided with the electrode layer 32 and the second ceramic green sheets 22 provided with the through hole 112; and a step of firing the stacked body 102.

According to such a manufacturing method, it is possible to manufacture a particulate matter measuring device component 100 as described hereinabove in which the ceramics-made densified base portion 1 and the porous ceramics-made filter portion 2 are formed integrally with each other.

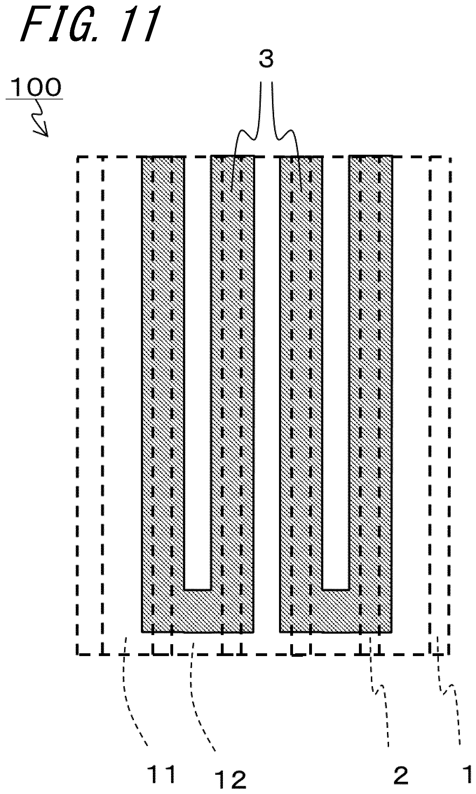

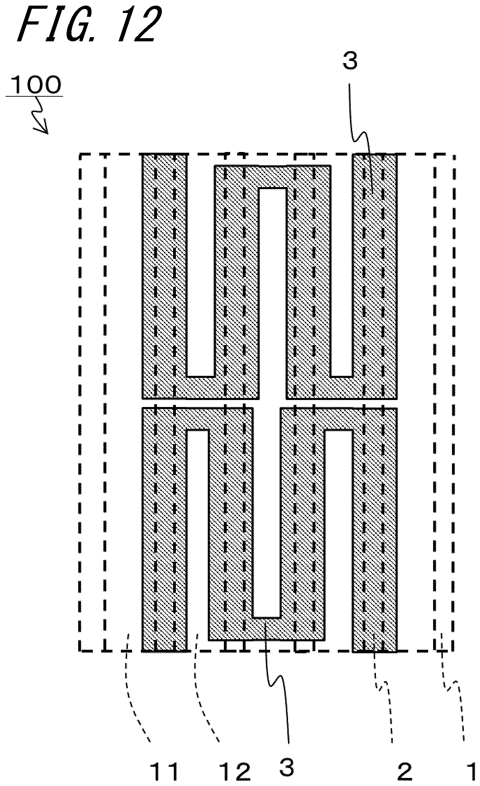

Moreover, as in examples shown in FIGS. 11 and 12, each of the pair of electrodes 3 may be composed of two meandering linear wiring patterns to define wiring of two systems. In the example shown in FIG. 11, the two wiring patterns are disposed side by side in the width direction of the flow channel 11, whereas, in the example shown in FIG. 12, the two wiring patterns are disposed side by side in the lengthwise direction of the flow channel 11.

Thus, owing to each of the pair of electrodes 3 disposed so that the filter portion 2 is sandwiched between the pair of electrodes 3 being made to define wiring of two systems, while particulate matter is detected by the electrode 3 corresponding to one of the two wiring systems, particulate matter collected by the electrode 3 corresponding to the other wiring system can be removed. This makes it possible to perform the detecting operation of particulate matter continuously without pausing the detecting operation of particulate matter for particulate matter removal. Although each of the pair of electrodes 3 disposed so that the filter portion 2 is sandwiched between the pair of electrodes 3 defines wiring of two systems in the examples shown in FIGS. 11 and 12, the component design is not limited to this. For example, the electrode 3 may be designed to define wiring of three or more systems.

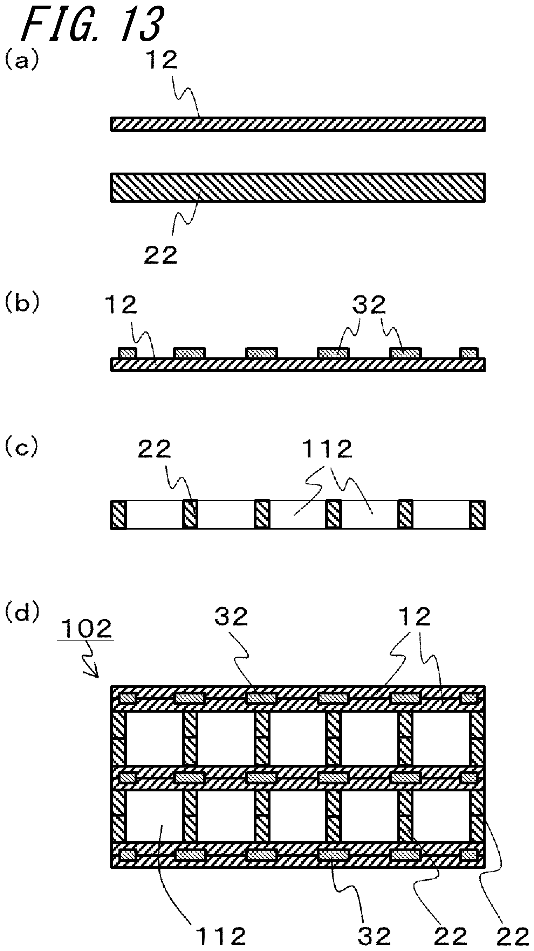

FIG. 13 is a schematic diagram showing a method for manufacturing the particulate matter measuring device component for each step. As in an example shown in FIG. 13(a), first, a plurality of the first ceramic green sheets 12 and a plurality of the second ceramic green sheets 22 are prepared. The first ceramic green sheets 12 undergo sintering in a subsequent firing process to constitute the base portion 1, and the second ceramic green sheets 22 likewise constitute the filter portion 2. The base portion 1 is formed of densified ceramics, whereas the filter portion 2 is formed of porous ceramics. Thus, the second ceramic green sheet 22 bears a larger number of pores than those of the first ceramic green sheet 12 through sintering in the subsequent firing process (the second ceramic green sheet 22 is greater in porosity than the first ceramic green sheet 12). Specifically, as compared with the first ceramic green sheet 12, the second ceramic green sheet 22 has a higher content of components for forming pores during sintering in the firing process. More specifically, the second ceramic green sheet 22 has a higher content of binder components, a pore-forming material, etc. Or, the second ceramic green sheet 22 has a lower content of sintering aid components with the aim of lowering sinterability to increase the number of pores.

The use of a pore-forming material is desirable from the viewpoint of easiness in adjustment of pore diameter and porosity. The pore-forming material has the form of particles that will be burnt to vanish in the subsequent firing process. Examples of the pore-forming material include acrylic resin beads (methacrylic ester copolymer beads), carbon powder, and crystalline cellulose. The pore-forming material in use preferably has a particle size which is 1 to 1.2 times the pore diameter of the filter portion 2. As described previously, in the case of forming the filter portion 2 having pore diameters ranging from 1 µm to 60 µm, it is possible to use a pore-forming material having an average particle size of 1 to 72 µm. Porosity adjustment is accomplished by adjusting the particle size and the amount of the pore-forming material.

In the case where the base portion 1 is formed of alumina ceramics, with respect to the first ceramic green sheet 12, a slurry is first prepared by admixing an organic binder such as acrylic resin, an organic solvent such as toluene or acetone, and a solution medium such as water in alumina powder and sintering aids (powder of SiO₂, MgO, CaO, etc.). The slurry is shaped into sheets by a film-forming technique such as the doctor blade method. A slurry for forming the second ceramic green sheet 22 is prepared by adding a pore-forming material to the slurry prepared for the formation of the first ceramic green sheet 12. Thus, in contrast to the first ceramic green sheet 12, the second ceramic green sheet 22 contains the pore-forming material.

In the case of providing the filter portions 2 having different pore diameters, for example, as the pore-forming material included in the slurry for forming the second ceramic green sheet 22, materials of different average particle sizes are used to produce the plurality of second ceramic green sheets 22 which differ from each other in the average particle size of the pore-forming material included therein. In the case of providing the filter portions 2 having different porosities, for example, by making the amounts of the pore-forming material to be added to the respective slurries for forming the second ceramic green sheet 22 different from each other, a plurality of types of the second ceramic green sheets 22 are prepared in which the pore-forming materials included therein have different particle sizes.

Next, as in an example shown in FIG. 13(b), the electrode layer 32 is formed on the first ceramic green sheet 12. The electrode layer 32 is sintered into the electrode 3 through the subsequent firing process. The electrode layer 32 is formed by applying, onto the first ceramic green sheet 12, a metallic paste predominantly composed of a metal material such as platinum or tungsten used as a major component of the electrode 3. The metallic paste can be prepared by kneading powder of the metal material in admixture with a resin binder and a solvent. The metallic paste is applied in a wiring pattern of the electrode 3 by means of screen printing or otherwise.

Moreover, as in an example shown in FIG. 13(c), the through hole 112 is provided in the second ceramic green sheet 22. The through hole 112 defines the flow channel 11. The through hole 112 is provided in the second ceramic green sheet 22 by punching operation using a punching die or by lasering.

Next, as in an example shown in FIG. 13(d), the stacked body 102 is formed by stacking together the first ceramic green sheets 12 provided with the electrode layer 32 and the second ceramic green sheets 22 provided with the through hole 112. In the example shown in FIG. 13(d), three base portion 1-forming portions are each constructed of a stack of two first ceramic green sheets 12, and each filter portion 2-forming portion is constructed of a stack of two second ceramic green sheets 22. Each of the base portion-forming portion and the filter portion-forming portion may be constructed of either a single ceramic green sheet or a stack of three or more ceramic green sheets.

The example shown in FIG. 13(d) is the stacked body 102 adopted in the production of the particulate matter measuring device component 100 as in an example shown in FIG. 6 in which the electrode 3 is embedded in the base portion 1, and therefore the electrode layer 32 is located between two first ceramic green sheets 12. The first ceramic green sheet 12 free of the electrode layer 32 is stacked on the first ceramic green sheet 12 provided with the electrode layer 32.

In the case of producing the particulate matter measuring device component 100 as in an example shown in FIG. 2, on the stack in which the first ceramic green sheet 12 free of the electrode layer 32 is stacked on the first ceramic green sheet 12 provided with the electrode layer 32, the filter portion 2-forming second ceramic green sheet 22 alone is stacked, and then, the first ceramic green sheet 12 in frame form is overlaid so as to surround the filter portion-forming second ceramic green sheets.

In the case of producing the earlier described construction in which the base portion 1 in contact with the filter portion 2 is provided, as a side wall, outside the outer filter portion 2 in the particulate matter measuring device component 100 as in the example shown in FIG. 6, an additional first ceramic green sheet 12 is bonded to the side surface of the stacked body 102 as shown in FIG. 13(d). As an alternative, the above-described frame-like first ceramic green sheet 12 is placed so that an inner side surface thereof makes contact with the second ceramic green sheet 22 which constitutes the outer filter portion 2.

In order to form the stacked body 102, the first ceramic green sheets 12 provided with the electrode layer 32 and the second ceramic green sheets 22 provided with the through hole 112 are stacked together, and thereafter are integrally joined together under pressure by a uniaxial pressing or otherwise.

By filling the through hole 112 with resin or the like which will be burnt to vanish in the subsequent firing process, it is possible to suppress deformation in a part of the first ceramic green sheet 12 which part lies above or below the through hole.

By firing the multi-layer body 102, there is obtained such a particulate matter measuring device component 100 as described hereinabove in which the ceramics-made densified base portion 1 and the porous ceramics-made filter portion 2 are formed integrally with each other. In the case where the base portion 1 and the filter portion 2 are formed of alumina ceramics, the firing temperature is set at 1500°C to 1600°C.

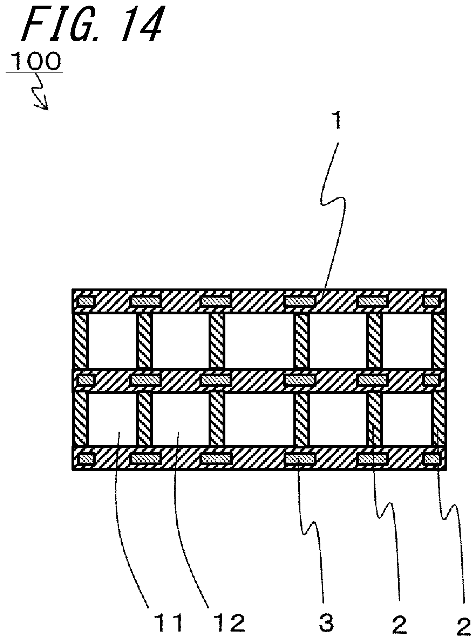

Moreover, as shown in FIG. 14, the spacing between adjacent filter portions 2 located on the center side (in the central region) of the flow channel 11 may be larger (wider) than the spacing between adjacent filter portions 2 located on the end side (in the outer peripheral region) of the space (the flow channel 11). Generally, since there is the tendency that the flow rate of the gas flowing through the central region of the flow channel 11 is greater than the flow rate of the gas flowing through the outer peripheral region of the flow channel 11, the spacing between the centrally-located adjacent filter portions 2 is increased, and thereby gas can flow smoothly.

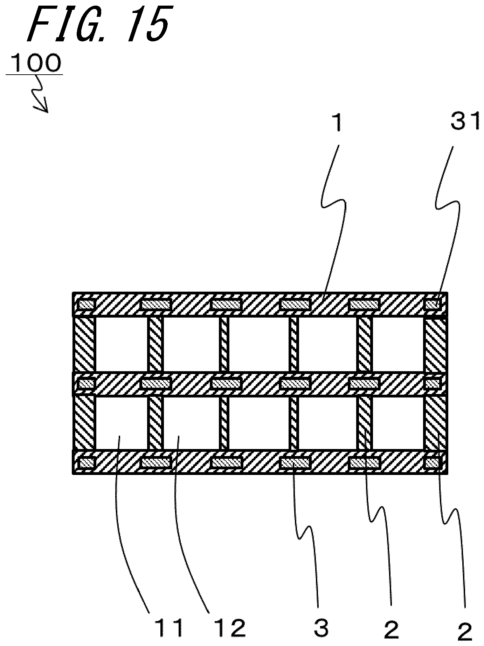

Moreover, as shown in FIG. 15, the filter portion 2 located on the center side (in the central region) of the space (the flow channel 11) may be made smaller in thickness than the filter portion 2 located on the end side (in the outer peripheral region) of the flow channel 11. In FIG. 15, the electrode 3 is located also at the end of the base portion 1 (for example, there is provided an electrode 31 located at the upper right end of the base portion 1). However, depending on the magnitude of the voltage applied to the electrode 3, the formation of the electrode 3 (the electrode 31, etc.) at the end of the base portion 1 may entail some improvements such as an increase in the width of the base portion 1 to leave a certain distance for insulation between the construction and the exterior thereof.

In this regard, as shown in FIG. 15, the thickness of the filter portion 2 located on the center side of the flow channel 11 (the width of the centrally-located filter portion 2 in the filter arrangement direction) may be adjusted to be smaller than the thickness of the filter portion 2 located on the end side of the flow channel 11 (the width of the end-side filter portion 2 in the filter arrangement direction). With the above-described arrangement, even if the base portion 1 becomes deformed so as to be inwardly concavely curved due to the difference in pressure (difference in atmospheric pressure) between the interior of the particulate matter measuring device component 100 (the interior of the flow channel 11) and the exterior thereof, a thermal stress resulting from this deformation can be reduced. More specifically, the deformation of the base portion 1 tends to become larger as it is closer to the center side of the flow channel 11. By making thinner the filter portion 2 located on the center side of the base portion where the deformation is large, it is possible to absorb the thermal stress by deflecting the filter portion 2. Thereby, it is possible to enhance the durability of the particulate matter measuring device component 100.

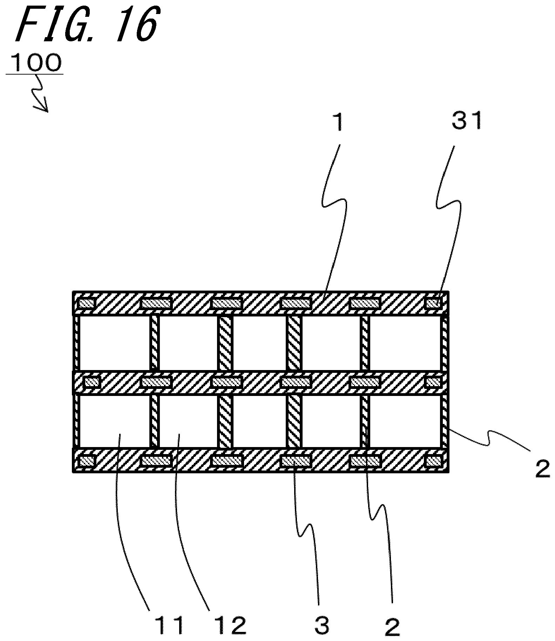

On the other hand, as shown in FIG. 16, the filter portion 2 located on the center side (in the central region) of the space (the flow channel 11) may be made greater in thickness than the filter portion 2 located on the end side (in the outer peripheral region) of the flow channel 11. In this case, contrary to the case shown in FIG. 15, gas flows readily on the end side of the flow channel. As described previously, although gas basically tends to flow more readily on the central side, by adopting the construction shown in FIG. 16, it is possible to facilitate the flow of gas toward the end side, so that the flow rates of gas in the respective flow channels 11 can be nearly uniform. The fact that the flow rates of gas are nearly uniform means that the amounts of particulate matter caught by the corresponding filter portions 2 are nearly uniform. This makes it possible to shorten the time required for the removal of particulate matter by application of heat. Thereby, it is possible to improve the long-term reliability of the particulate matter measuring device component 100.

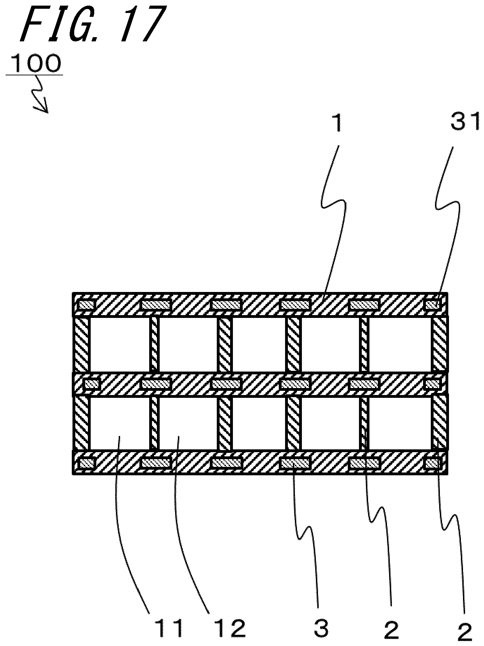

As shown in FIG. 2, where the flow channels 11 are surrounded by the base portion 1, the filter portions 2 may be configured to have a smaller thickness gradually toward the end side. However, as shown in FIG. 6, where the flow channel 11 is surrounded by the base portion 1 and the filter portion 2, the arrangement shown in FIG. 17 may be adopted. In the particulate matter measuring device component 100 shown in FIG. 17, the filter portions 2 are configured to have a smaller thickness gradually with distance from the center side, but this is not the case with respect to the filter portions 2 located at the outermost periphery. More specifically, "the filter portion 2 located at the outermost periphery" is greater in thickness than, "of the filter portions 2 exclusive of the filter portion 2 located at the outermost periphery, the filter portion 2 located at the endmost side". This makes it possible to restrain gas from easily escaping to the outside through the outermost filter portion 2 while rendering the flows of gas in the respective flow channels 11 nearly uniform in flow rate. Thus, while ensuring an amount of gas passing through the particulate matter measuring device component 100, it is possible to render the flows of gas in the respective flow channels 11 nearly uniform in flow rate.

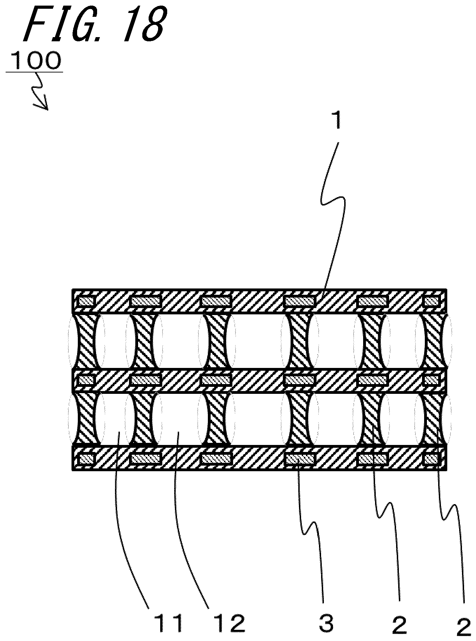

Moreover, as shown in FIG. 18, the wall surface of the filter portion 2 which faces the flow channel 11 may be concavely curved. More specifically, the wall surface of the filter portion 2 which faces the flow channel 11 may be arcuately recessed at a midportion thereof. This makes it possible to increase the surface area of the filter portion 2, and therefore increase the amount of particulate matter which can be collected on the filter portion 2.

Moreover, as shown in FIG. 18, of the plurality of filter portions 2, the filter portion 2 located at the outermost periphery may have an outer wall surface thereof (externally exposed wall surface which does not face the flow channel 11) concavely curved. More specifically, the outer wall surface may be arcuately recessed at a midportion thereof. This makes it possible to reduce the likelihood of contact between the filter portion 2 and the exterior thereof, and therefore reduce the likelihood of damage to the filter portion 2. Consequently, it is possible to improve the long-term reliability of the particulate matter measuring device component 100.

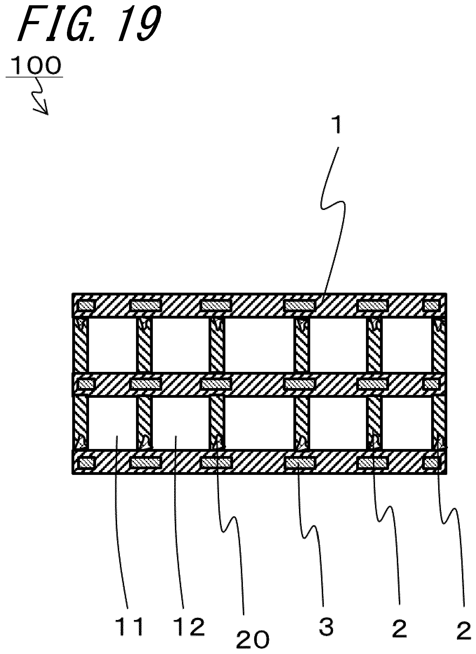

Moreover, the base portion 1 may contain a glass component, and also, as shown in FIG. 19, the glass component may be applied so as to spread out over part of the filter portion 2. In other words, the base portion 1 contains a glass component, and, the filter portion 2 has a glass-spreading region 20 located near the base portion 1. This makes it possible to enhance the adhesion between the base portion 1 and the filter portion 2, and therefore improve the long-term reliability of the particulate matter measuring device component 100.

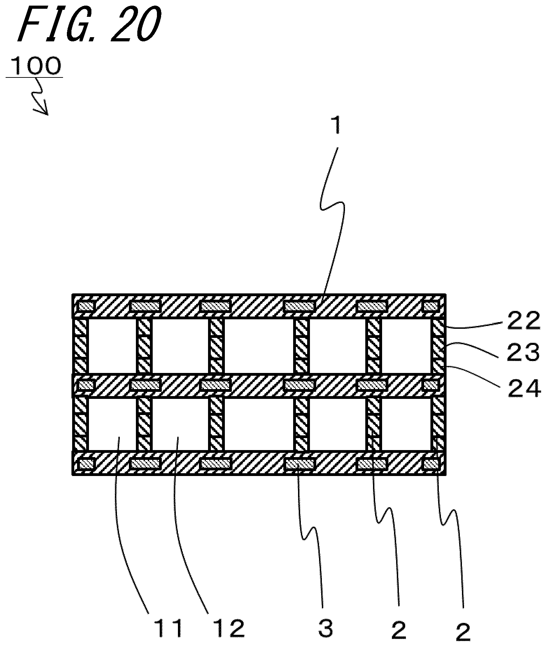

Moreover, as shown in FIG. 20, given that the filter portion 2 is divided into three layers in the vertical direction (an upper layer 22, an intermediate layer 23, and a lower layer 24), the upper layer 22 and the lower layer 24, each adjoining to the base portion 1, may be greater in porosity than the intermediate layer 23. Accordingly, the thermal stress developed in the filter portion 2 and the base portion 1 under heat cycle can be absorbed by the upper layer 22 and the lower layer 24. This makes it possible to reduce the likelihood of occurrence of thermal stress in the intermediate layer 23 which is subjected to the heaviest flow of gas. Consequently, since the likelihood of damage to the intermediate layer 23 can be reduced, it is possible to improve the long-term reliability of the particulate matter measuring device component 100.

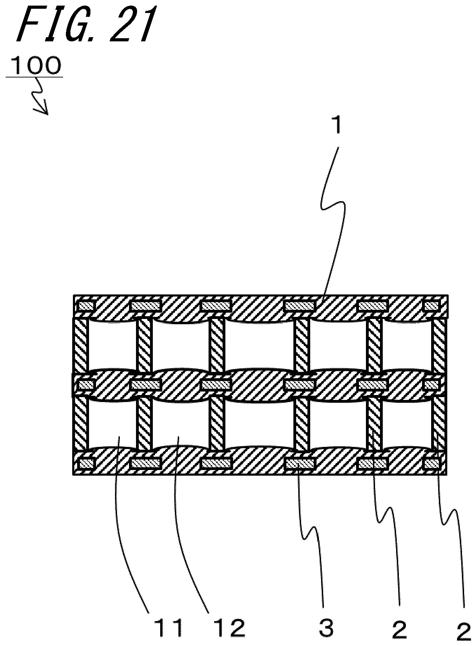

Moreover, as shown in FIG. 21, a part of the base portion 1 which faces the flow channel 11 may be arcuately raised. Accordingly, the filter portion 2 is held at upper and lower ends thereof by the arcuately raised parts of the base portion 1 in sandwich style, and therefore it is possible to improve resistance to bending stress. Consequently, it is possible to improve the long-term reliability of the particulate matter measuring device component 100.

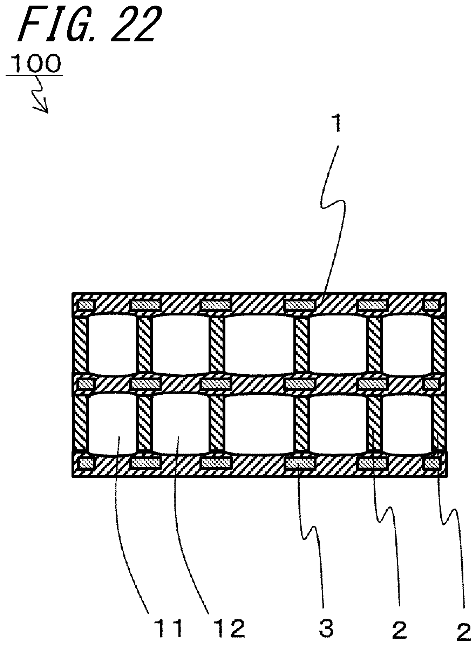

On the other hand, as shown in FIG. 22, a part of the base portion 1 which faces the flow channel 11 may be arcuately recessed. This makes it possible to make the movement of the gas flowing through the flow channel 11 smoother. More specifically, it is possible to restrain the gas from stagnation in the vicinity of a corner defined by the surface of the base portion 1 and the wall surface of the filter portion 2. This makes it possible to improve the sensitivity of the particulate matter measuring device component 100.

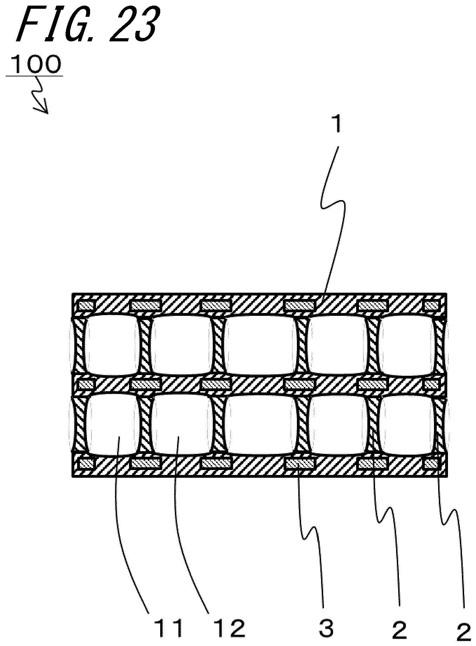

Moreover, as shown in FIG. 23, the corner of the flow channel 11 may be smoothed. More specifically, a part of the base portion 1 which faces the flow channel 11 is arcuately recessed, a wall surface of the filter portion 2 which faces flow channel 11 is arcuately recessed, and these arcuately recessed portions may be smoothly continuous. This makes it possible to make the movement of the gas even smoother, and therefore further improve the sensitivity of the particulate matter measuring device component 100.

Moreover, in the flow channel 11 as seen in section perpendicular to the lengthwise direction, the corner defined by the part of the base portion 1 which faces the flow channel 11 and the wall surface of the filter portion 2 which faces the flow channel 11 may be arcuately shaped. This makes it possible to make the movement of the gas smoother at the corner.

Moreover, the corner defined by the part of the base portion 1 which faces the flow channel 11 and the wall surface of the filter portion 2 which faces the flow channel 11 may be arcuately shaped, and also a continuous region with the arcuately shaped corner may be provided along the length of the flow channel 11. This makes it possible to make the movement of the gas even smoother at the corner.

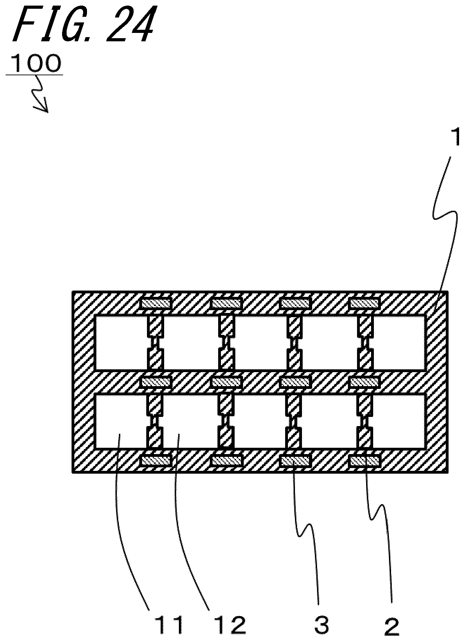

Moreover, as shown in FIG. 24, in the flow channel 11 as seen in section perpendicular to the lengthwise direction, the wall surface of the filter portion 2 which faces the flow channel 11 may be provided with a recess. This makes it possible to increase the surface area of the wall surface of the filter portion 2, and therefore increase the amount of particulate matter which can be collected on the filter portion 2.

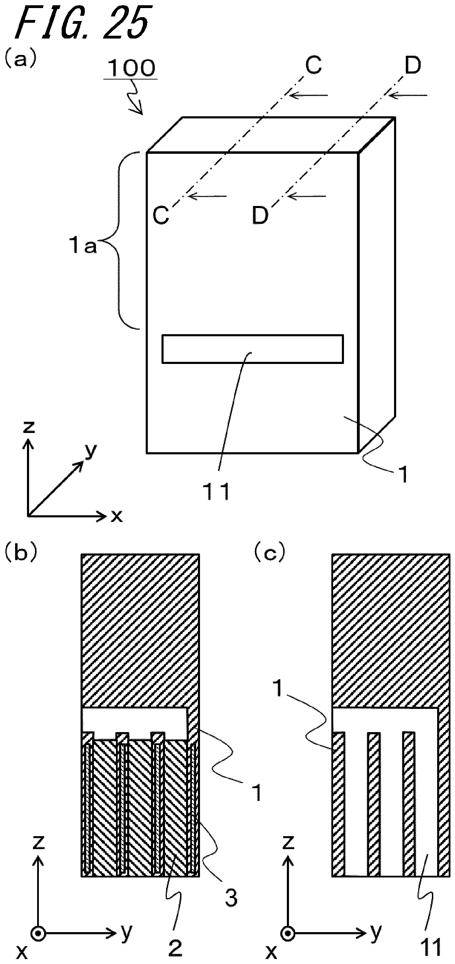

In the particulate matter measuring device component 100 thus far described, although the flow channel 11 is illustrated as extending from one side surface of the base portion 1 to the side surface located opposite thereto, the design of the flow channel is not limited to this. For example, as in an example shown in FIG. 25, the flow channel 11 may be configured so that one end thereof is opened on one side surface of the base portion 1, and the other end is opened on a surface of the base portion 1 which is located at one end thereof (lower surface). Alternatively, the flow channel 11 may be configured so as to be opened on two side surface of the base portion 1 which are opposed to each other and a surface of the base portion 1 which is located at one end thereof (lower surface). More specifically, a gas inlet and a gas outlet may be provided on adjacent surfaces, respectively, of the base portion. By placing one of the adjacent surfaces which has the gas outlet along the flowing direction of exhaust gas, even if the gas inlet has a small size, exhaust gas readily flows into the flow channel through the gas inlet provided on the other surface.

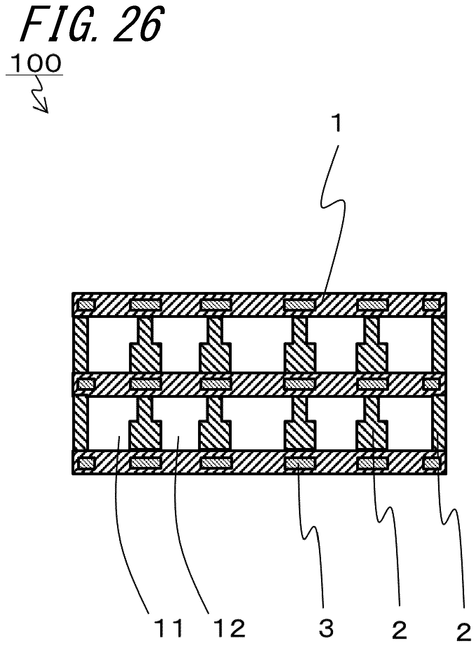

Moreover, as shown in FIG. 26, the filter portion 2 may be composed of two parts having different widths as seen in vertical section. In other words, the filter portion 2 may be composed of a broad part (large part) and a narrow part (small part). By providing the filter portion 2 with the broad part, when external force is applied to the particulate matter measuring device component 100 in the vertical direction, it is possible to reduce the likelihood of occurrence of a break in the filter portion 2. Moreover, by providing the filter portion 2 with the narrow part, the gas can flow easily through the filter portion 2.

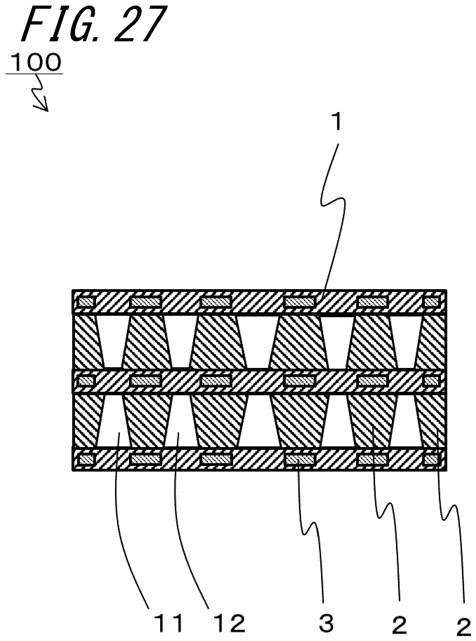

Moreover, as shown in FIG. 27, the flow channel 11 may be so shaped that a width thereof becomes larger gradually toward the outside (the upper side in the flow channel 11 located on an upper side, whereas the lower side in the flow channel 11 located on a lower side) in the vertical direction. More specifically, the flow channel 11 has a trapezoidal shape in which a long side thereof is located on the outside. Generally, there is the tendency that gas flows less smoothly in the outer side than in the inner side (center side) of the flow channel 11 as seen in vertical section, but by forming the flow channel 11 into the above-described shape, it is possible to reduce stagnation of gas on the outer side of the flow channel 11. Although the shape of the flow channel 11 is defined by a trapezoid in FIG. 27 due to the wall surface being linearly shaped, the channel shape is not limited to this. For example, the wall surface may have one step, or may have a plurality of steps.

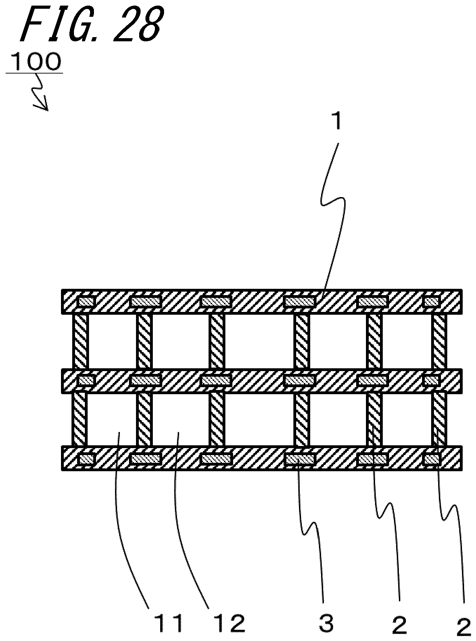

Moreover, as shown in FIG. 28, the base portion 1 may protrude outward beyond the filter portion 2 located at the outermost periphery. This makes it possible to reduce the likelihood of damage to the filter portion 2 located at the outermost periphery due to a collision with a foreign matter.

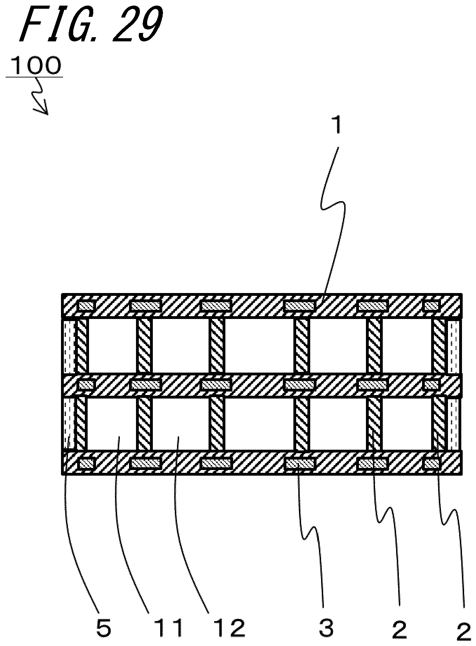

Moreover, as shown in FIG. 29, the base portion 1 may protrude outward beyond the filter portion 2 located at the outermost periphery, and the surface of the filter portion 2 located at the outermost periphery may be covered with a protective layer 5. This makes it possible to further reduce the likelihood of damage to the filter portion 2. Moreover, this makes it possible to restrain gas from flowing out of the flow channel 11 through the filter portion 2 located at the outermost periphery. As the protective layer 5, for example, it is possible to use a resin material containing ceramic powder in a dispersed state.

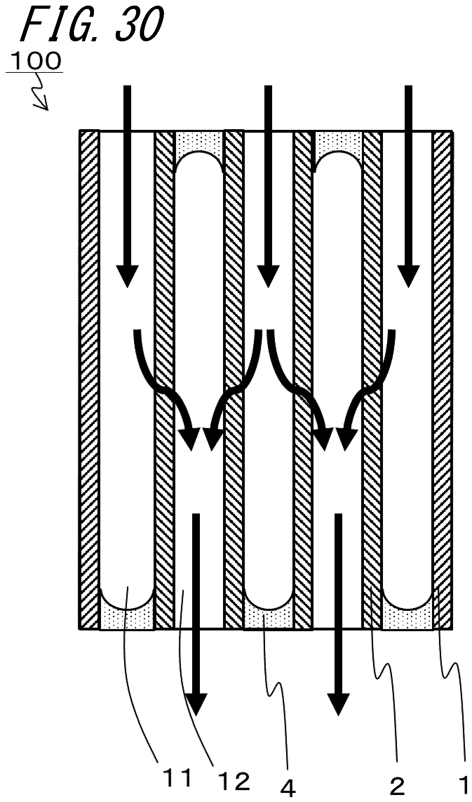

Moreover, as shown in FIG. 30, in the flow channel 11 as seen in transverse section, part of ends thereof may be closed by a sealing portion 4, and a part of the sealing portion 4 which faces the flow channel 11 may be arcuately recessed. This makes it possible to reduce stagnation of gas in the vicinity of the sealing portion 4 within the flow channel 11.

### Reference Signs List

1: Base portion
11: Flow channel
12: Split channel
2: Filter portion
3: Electrode
4: Sealing portion
5: Protective layer
100, 200: Particulate matter measuring device component

## Claims

1. A particulate matter measuring device component, comprising:
a base portion formed of ceramics, the base portion being internally provided with a flow channel through which gas flows;
a filter portion formed of porous ceramics, the filter portion being disposed within the flow channel so as to divide the flow channel into a plurality of portions; and
a pair of electrodes for formation of electrostatic capacitance, disposed in the base portion so that the filter portion is sandwiched between the pair of electrodes,
a wall surface of the flow channel of the base portion being denser than a surface of the filter portion.

2. A particulate matter measuring device component comprising:
a pair of base portions, each comprising a plate-like member formed of ceramics, the pair of base portions being disposed in juxtaposition so that principal surfaces of the pair of base portions are opposed to each other;
a filter portion formed of porous ceramics, the filter portion being disposed so as to divide a space between the pair of base portions to form flow channels; and
a pair of electrodes for formation of electrostatic capacitance, each being disposed in corresponding one of the pair of base portions, the pair of electrodes being disposed so that the filter portion is sandwiched between the pair of electrodes,
the opposed principal surfaces of the pair of base portions being denser than a surface of the filter portion.

3. The particulate matter measuring device component according to claim 1 or 2, wherein the pair of electrodes is embedded in the base portion or the pair of base portions.

4. The particulate matter measuring device component according to any one of claims 1 to 3, wherein the base portion or the pair of base portions and the filter portion are formed integrally with each other.

5. The particulate matter measuring device component according to any one of claims 1 to 4, wherein the base portion or the pair of base portions and the filter portion are formed of a same ceramics.

6. The particulate matter measuring device component according to claim 5, wherein the base portion or the pair of base portions and the filter portion are formed of alumina.

7. The particulate matter measuring device component according to any one of claims 1 to 6, wherein the pair of electrodes has a linear wiring pattern so as to extend along the filter portion.

8. The particulate matter measuring device component according to any one of claims 1 to 7, wherein the pair of electrodes has a linear wiring pattern, and comprises a portion lying in a region of the base portion or the pair of base portions in which the filter portion is interposed, and a portion lying in a region of the base portion or the pair of base portions in which the filter portion is not interposed, and
the portion of the pair of electrodes lying in the region of the base portion or the pair of base portions in which the filter portion is not interposed is narrower in width than the portion of the pair of electrodes lying in the region of the base portion or the pair of base portions in which the filter portion is interposed, as seen in plan view of the particulate matter measuring device component.

9. The particulate matter measuring device component according to any one of claims 1 to 8, wherein the filter portion comprises a plurality of filter portions having different porous degrees from each other.

10. The particulate matter measuring device component according to claim 9, wherein the porous degrees include a pore diameter.

11. The particulate matter measuring device component according to claim 9, wherein the porous degrees include porosity, and in the flow channel as seen in section perpendicular to a lengthwise direction thereof, a filter portion of the plurality of filter portions which is located on an outer side is greater in porosity than a filter portion of the plurality of filter portions which is located on an inner side.

12. The particulate matter measuring device component according to any one of claims 1 to 11, wherein, in the flow channel as seen in section perpendicular to a lengthwise direction thereof, a corner defined by a part of the base portion or the pair of base portions which faces the flow channel and a wall surface of the filter portion which faces the flow channel is arcuately shaped.

13. The particulate matter measuring device component according to claim 12, wherein a region in which the corner is arcuately shaped is continuous in the lengthwise direction of the flow channel.

14. The particulate matter measuring device component according to any one of claims 1 to 13, wherein, in the flow channel as seen in section perpendicular to a lengthwise direction thereof, a wall surface of the filter portion which faces the flow channel is provided with a recess.

15. The particulate matter measuring device component according to any one of claims 1 to 13, wherein, in the flow channel as seen in section perpendicular to a lengthwise direction thereof, a wall surface of the filter portion which faces the flow channel is arcuately recessed at a midportion thereof.

16. The particulate matter measuring device component according to any one of claims 1 to 15, wherein, given that the filter portion is divided into three layers composed of an upper layer, an intermediate layer, and a lower layer in a vertical direction thereof, the upper layer and the lower layer, each adjoining to the base portion or the pair of base portions, are greater in porosity than the intermediate layer.

17. A method for manufacturing a particulate matter measuring device component, comprising:
a step of preparing a plurality of first ceramic green sheets;
a step of preparing a plurality of second ceramic green sheets;
a step of forming an electrode layer on each of the plurality of first ceramic green sheets;
a step of providing a through hole in each of the plurality of second ceramic green sheets;
a step of forming a stacked body by stacking together the first ceramic green sheets provided with the electrode layer and the second ceramic green sheets provided with the through hole; and
a step of firing the stacked body.
